# EUROPEAN PATENT APPLICATION

(11) **EP 4 621 165 A1**
(43) Date of publication of application: **24.09.2025**
(21) Application number: 25165334.1
(22) Date of filing: 21.03.2025
(51) Int. Cl.: E04H 4/16, G05D 1/00, G05D 1/242, G05D 1/648, G05D 105/10, G05D 107/00, G05D 109/30, G05D 111/10

(54) **SWIMMING POOL ROBOT ADAPTED TO CLEAN ALONG WALL EDGES AND ASSOCIATED CLEANING METHODS**

(30) Priority: 25.03.2024 CN 202410345675
(71) Applicant: Aiper Global Pte. Ltd., Singapore 409051 (SG)
(72) Inventor: TANG, Gujie, 409051 Singapore (SG); ZHENG, Kai, 409051 Singapore (SG)
(74) Representative: HGF

(57) **Abstract**

The present disclosure provides a method for a swimming pool robot to clean along a wall edge, including when a task of cleaning along the wall edge is performed, determining a distance between the swimming pool robot and a swimming pool wall; determining whether the distance between the swimming pool robot and the swimming pool wall matches a target distance when moving along the wall edge, and when the distance does not match the target distance, controlling the swimming pool robot to turn a preset angle towards the swimming pool wall, and driving the swimming pool robot to move forward; determining whether the guide device touches the swimming pool wall, and when the guide device touches the swimming pool wall, driving the swimming pool robot to move forward, until the distance between the swimming pool robot and the swimming pool wall matches the target distance.

## Description

### CROSS-REFERENCE TO RELATED APPLICATION

This application claims priority to Chinese Patent Application No. 202410345675.3, filed on March 25, 2024, which is hereby incorporated by reference in its entirety.

### FIELD

The present disclosure relates to the technical field of robot path planning, in particular, to a method for a swimming pool robot to clean along a wall edge, an apparatus, a swimming pool robot and a medium.

### BACKGROUND

In recent years, with advances in science and technology and developments of Internet, robot technology has become increasingly sophisticated and been extensively applied in various fields of life. A variety of robots with dedicated purposes are flooding into the market, where swimming pool cleaning robots undertake a large number of cleaning tasks for users, which is of great assistance. The swimming pool cleaning robots are used to clean foreign matters, such as slit, dirt and algae, on the bottoms and side walls of swimming pools to keep the swimming pools clean.

However, there are certain challenges in path planning and cleaning effect from ordinary swimming pool cleaning robots on the market at present. Most swimming pool cleaning robots rely mainly on optical sensors, such as lidars, to detect and identify the edge of the swimming pool during the cleaning process. Whereas, the working efficiency of the optical sensor in water is poor, which is easy to cause signal attenuation due to water quality, mobility and other factors, and then affect the operation and positioning of the cleaning robot, resulting in the inability to guarantee the cleaning effect of the narrow area such as the corner or the wall edge of the swimming pool.

Alternatively, most swimming pool cleaning robots also rely on acoustic sensors, such as ultrasonic sensors, to detect and identify the wall edge of the swimming pool during the cleaning process. Whereas, due to the limitation of detecting distance, when the ultrasonic sensors work in water, the cleaning effect of the narrow area such as the corner or the wall edge of the swimming pool cannot be guaranteed. Therefore, traditional swimming pool cleaning robots need to be further optimized and improved to better meet the overall needs of users for swimming pool cleaning.

### SUMMARY

In view of this, embodiments of the present disclosure provide a method for a swimming pool robot to clean along a wall edge, an apparatus, a swimming pool robot and a computer readable storage medium, to solve the technical problem in the prior art that since signal attenuation of optical sensor caused by water quality, mobility and other factors and inaccurate identifying of the wall edge by acoustic sensors, and thus the operation and positioning of the cleaning robots is affected, resulting in the inability to guarantee the cleaning effect of the narrow area such as the corner or the wall edge of the swimming pool.

A first aspect of an embodiment of the present disclosure provides a method for a swimming pool robot to clean along a wall edge. The swimming pool robot includes a distance detection sensor and a guide device, and at least one distance detection sensor and the guide device are located on same side of the swimming pool robot, where the method includes: when a task of cleaning along a wall edge is performed, determining, by two distance detection sensors, a distance between the swimming pool robot and a swimming pool wall; determining whether the distance between the swimming pool robot and the swimming pool wall matches a target distance when moving along the wall edge, and when the distance between the swimming pool robot and the swimming pool wall does not match the target distance when moving along the swimming pool edge, controlling the swimming pool robot to turn a preset angle towards the swimming pool wall, and driving the swimming pool robot to move forward; determining whether the guide device touches the swimming pool wall, and when the guide device touches the swimming pool wall, driving the swimming pool robot to move forward by a sliding friction generated by the guide device and the swimming pool wall, until the distance between the swimming pool robot and the swimming pool wall matches the target distance when moving along the wall edge.

A second aspect of an embodiment of the present disclosure provides an apparatus for a swimming pool robot to clean along a wall edge. The swimming pool robot includes a distance detection sensor and a guide device, and at least one distance detection sensor and the guide device are located on same side of the swimming pool robot, and the apparatus includes: a distance determination module configured to determine, by two distance detection sensors, a distance between the swimming pool robot and a swimming pool wall when a task of cleaning along a wall edge is performed; a control module configured to determine whether the distance between the swimming pool robot and the swimming pool wall matches a target distance when moving along the wall edge, and when the distance between the swimming pool robot and the swimming pool wall does not match the target distance when moving along the wall edge, control the swimming pool robot to turn a preset angle towards the swimming pool wall, and drive the swimming pool robot to move forward; a wall edge distance adjustment module configured to determine whether the guide device touches the swimming pool wall, and when the guide device touches the swimming pool wall, driving the swimming pool robot to move forward by a sliding friction generated by the guide device and the swimming pool wall, until the distance between the swimming pool robot and the swimming pool wall matches the target distance when moving along the wall edge.

A third aspect of an embodiment of the present disclosure provides a swimming pool robot, including a memory, a processor, and a computer program that is stored in the memory and is run on the processor, the processor executes the computer program to implement the steps of the method as described above.

A fourth aspect of an embodiment of the present disclosure provides a computer readable storage medium that stores a computer program, and when executed by a processor, the computer program implements steps of the method as described above.

Compared with the prior art, embodiments of the present disclosure have the beneficial effect that the present disclosure adopts a manner that the distance detection sensor and the guide device coordinate with the swimming pool wall to realize the precise cleaning of the swimming pool robot along the wall edge. This design allows the swimming pool robot to more accurately identify and approach the swimming pool wall, thereby achieving an efficient cleaning of the swimming pool wall. First, equipped with the distance detection sensors, the swimming pool robot can effectively sense and determine its distance from the swimming pool wall. When a determined distance deviates from a preset distance of cleaning along a wall edge, the swimming pool robot can adjust its direction and drive forward by a control system to clean close to the swimming pool wall. Secondly, when the guide device collides with the swimming pool wall, the swimming pool robot can drive itself to move forward by using the friction generated between the guide device and the swimming pool wall, further ensuring the stability and continuity of its cleaning along the wall edge. In this way, the cleaning work along the wall of the swimming pool robot can not only improve the cleaning efficiency, but also improve the effectiveness of the cleaning results, thereby effectively solving the problems of the existing swimming pool robot in cleaning the areas of narrow outline, such as the areas along the swimming pool wall.

### BRIEF DESCRIPTION OF THE DRAWINGS

In order to more clearly illustrate the technical solutions of the embodiments of the present disclosure, a brief introduction will be made below to the accompanying drawings required for the description of the embodiment or the prior art. Obviously, the accompanying drawings in the description below are only some embodiments of the present disclosure. For persons skilled in the art, other accompanying drawings can also be obtained from these accompanying drawings without creative labor.
FIG. 1 is a flowchart schematic diagram of a method for a swimming pool robot to clean along a wall edge provided by an embodiment of the present disclosure.
FIG. 2 is a schematic diagram of a position of a distance detection sensor and a guide device on the swimming pool robot provided by an embodiment of the present disclosure.
FIG. 3 is a schematic diagram of a state change when the swimming pool robot provided by an embodiment of the present disclosure realizes a target wall edge movement.
FIG. 4 is schematic diagram of realizing a state change of a turning of the swimming pool robot provided by an embodiment of the present disclosure.
FIG. 5 is a structural schematic diagram of an apparatus for a swimming pool robot to clean along a wall edge provided by an embodiment of the present disclosure.
FIG. 6 is a structural schematic diagram of a swimming pool robot provided by an embodiment of the present disclosure.

### DETAILED DESCRIPTION OF EMBODIMENTS

In following description, specific details such as specific system structures, techniques, etc. are presented for illustration rather than qualification purposes to fully understand the embodiments of the present disclosure. However, it should be clear to persons skilled in the art that the present disclosure may be implemented in other embodiments without these specific details. In other cases, detailed illustrations of well-known systems, apparatus, circuits, and methods are omitted, so as not to prejudice the description of the present disclosure with unnecessary details.

A method and an apparatus for a swimming pool robot to clean along a wall edge according to the embodiments of the present disclosure are described in detail below in conjunction with the accompanying drawings.

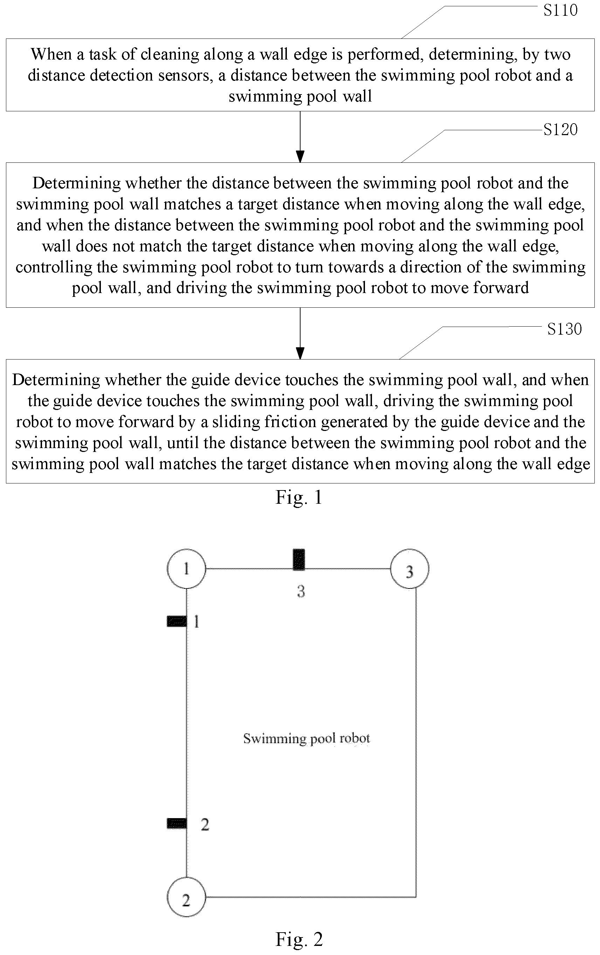

FIG. 1 is a flowchart schematic diagram of a method for a swimming pool robot to clean along a wall edge provided by an embodiment of the present disclosure. The method provided by the embodiments of the present disclosure may be performed by any electronic device having computer processing power, such as a swimming pool robot, which may include a distance detection sensor and a guide device, and at least one distance detection sensor and the guide device are located on same side of the swimming pool robot.

As shown in FIG. 1, a method for a swimming pool robot to clean along a wall edge includes step S110 to step S130.

In step S110, when a task of cleaning along a wall edge is performed, determining, by two distance detection sensors, a distance between the swimming pool robot and a swimming pool wall.

In step S120, determining whether the distance between the swimming pool robot and the swimming pool wall matches a target distance when moving along the wall edge, and when the distance between the swimming pool robot and the swimming pool wall does not match the target distance when moving along the wall edge, controlling the swimming pool robot to turn towards the swimming pool wall, and driving the swimming pool robot to move forward.

In step S130, determining whether the guide device touches the swimming pool wall, and when the guide device touches the swimming pool wall, driving the swimming pool robot to move forward by a sliding friction generated by the guide device and the swimming pool wall, until the distance between the swimming pool robot and the swimming pool wall matches the target distance when moving along the wall edge.

The method adopts a manner that the distance detection sensor and the guide device coordinate with the swimming pool wall, so that the swimming pool robot precisely cleans along the wall edge. This design allows the swimming pool robot to more accurately identify and approach the swimming pool wall, thereby achieving an efficient cleaning of the swimming pool wall. First, equipped with the distance detection sensors, the swimming pool robot can effectively sense and determine its distance from the swimming pool wall. When a determined distance deviates from a preset distance of cleaning along a wall edge, the swimming pool robot can adjust its direction and drive forward by a control system to clean close to the swimming pool wall. Secondly, when the guide device touches the swimming pool wall, the swimming pool robot can drive itself to move forward by using the friction generated between the guide device and the swimming pool wall, further ensuring the stability and continuity of its cleaning along the wall edge. In this way, the cleaning work along the wall of the swimming pool robot can not only improve the cleaning efficiency, but also improve the effectiveness of the cleaning results, thereby effectively solving the problems of the existing swimming pool robot in cleaning the areas of a narrow outline, such as the areas along the swimming pool wall.

In some embodiments, the task of cleaning along the wall edge can be used to clean the narrow outline of the swimming pool, such as an edge of the swimming pool wall, an edge of an obstacle, and so on. The task of cleaning along the wall edge is a targeted cleaning mode, which is mainly used to clean the areas of the narrow outline in the environment of the swimming pool, such as the edge of the swimming pool wall and the edge of the obstacle. First of all, for the edge of the swimming pool wall, this is one of the areas for traditional swimming pool cleaning robots to most difficultly achieve the ideal cleaning effect. A part of the edge of the swimming pool wall is an area of frequent current scour, where dirt such as garbage and algae are easy to deposit, and this part is an area that is difficult to be covered by a traditional cleaning method of the swimming pool robot, resulting in low cleaning efficiency. Secondly, for the edge of the obstacle in the swimming pool, such as the edge of the walk-in swimming pool ladder and other floating objects encountered in the moving, these are the difficulties that when performing the cleaning task, the swimming pool robot should pay attention to. Due to the complex shape of these areas, the conventional cleaning mode is difficult to achieve an ideal cleaning effect, and it is also necessary to avoid damage to the apparatus and the device in the swimming pool during the cleaning. Therefore, the task of cleaning along the wall edge adopts a customized cleaning mode. Through a composite design of the distance detection sensor and the guide device, as well as the itself control system of the robot, the swimming pool robot can adjust itself moving direction and position according to the actual road conditions, so as to ensure smoothly completing the task of cleaning along the wall edge. This modern cleaning mode has higher cleaning efficient and better cleaning effect, thereby greatly improving the convenience and the user experience of the cleaning work.

In some embodiments, the distance detection sensor may be an infrared sensor, located at a side of the swimming pool robot, and the number of the distance detection sensor may be one or two. When the task of cleaning along a wall edge is performed by the swimming pool robot, for example, the number of distance detection sensors are two, the distance between the swimming pool robot and the swimming pool wall is determined by two infrared sensors. For example, referring to FIG. 2, two infrared sensors, such as an infrared sensor 1 and an infrared sensor 2, can be disposed on the same side of the swimming pool robot. In the present embodiment, the infrared sensor 1 and infrared sensor 2 may have a range of 20 cm to 50 cm. The distance between the swimming pool robot and the swimming pool wall is determined by the infrared sensor 1 and the infrared sensor 2 sending infrared pulse signals to the swimming pool wall.

Based on the above-mentioned embodiment, when the task of cleaning along a wall edge is performed by the swimming pool robot, the determining, by the infrared sensor, the distance between the swimming pool robot and the swimming pool wall includes: when the task of cleaning along a wall edge is performed by the swimming pool robot, a time information of sending, by the infrared sensor, infrared pulse signals to the swimming pool wall and a time information of receiving, by the infrared sensor, infrared pulse signals returned from the swimming pool wall are recorded in real time. The distance between the swimming pool robot and the swimming pool wall is determined according to the time information of sending, by infrared sensor, the infrared pulse signals to the swimming pool wall and the time information of receiving, by the infrared sensor, the infrared pulse signals returned from the swimming pool wall. For example, the infrared sensors are designed to be on the same side of the swimming pool robot, which can respectively send infrared pulse signals to the swimming pool wall and receive the infrared pulse signals returned from the swimming pool wall. In this way, two-way communication and information exchange are achieved between the infrared sensors and the swimming pool wall. When the task of cleaning along a wall edge is performed by the swimming pool robot, the infrared sensor records wall in real time the time information of sending infrared pulse signals to the swimming pool wall and the time information of receiving the infrared pulse signals returned from the swimming pool. This time information includes the speed at which the infrared light pulse travels through the water environment of the swimming pool and the time required for the infrared light pulse to travel from the sensor to the swimming pool wall and from the swimming pool wall to the sensor. According to two time information, a total time between sending the infrared light pulse and receiving the infrared light pulse can be calculated. Dividing the total time by the speed at which the infrared light travels through the water gives the distance between the swimming pool robot and the swimming pool wall. This distance information is important for the swimming pool robot, because it determines how the swimming pool robot adjusts its position and moving direction to achieve the best cleaning effect along the wall edge.

In some embodiments, the target distance when moving along the wall edge can be set according to the range of the distance detection sensor, for example, a minimum range of the distance detection sensor can be set as the target distance when moving along the wall edge. Specifically, the target distance when moving along the wall edge may be less than or equal to 5 cm, so that the swimming pool robot can realize the clean of the narrow area of the swimming pool along the wall edge. Specifically, when a task of cleaning along a wall edge is performed by the swimming pool robot, the target distance when moving along the wall edge is the best distance that the swimming pool robot should clean as close to and along the wall edge of the swimming pool as possible. The distance can be set according to the range of the distance detection sensor. The range refers to a range between a maximum distance and minimum distance that can be accurately measured by the range detection sensor. For example, if the distance detection sensor has a range of 2 cm to 50 cm, it means that it can accurately measure objects located between 2 cm and 50 cm. In the present disclosure, a minimum range of the distance detection sensor can be set as the target distance when moving along the wall edge. The minimum range refers to the shortest distance that can be measured by the distance detection sensor. Setting the target distance when moving along the wall edge means that the swimming pool robot can perform cleaning work close to the wall edge of the swimming pool, and even achieve so-called "extreme cleaning along the wall edge", that is, an efficient cleaning of the narrowest areas of the swimming pool is performed. In this way, whether it is the wall edge of the swimming pool or other narrow areas in the swimming pool, the swimming pool robot can perform deep cleaning, improving the cleaning efficiency and cleaning quality. In the present example, a first preset threshold can also be set according to the minimum range, for example, the minimum range is defined as the first preset threshold, which is used to determine whether the distance between the swimming pool robot and the swimming pool wall matches the target distance when moving along the wall edge.

In some embodiments, the determining whether the distance between the swimming pool robot and the swimming pool wall matches the target distance when moving along the wall edge, includes: when the distance between the swimming pool robot and the swimming pool wall is less than or equal to the first preset threshold, determining that the distance between the swimming pool robot and the swimming pool wall matches the target distance when moving along the wall edge; when the distance between the swimming pool robot and the swimming pool wall is greater than the first preset threshold, determining that the distance between the swimming pool robot and the swimming pool wall does not match the target distance when moving along the wall edge. In the present embodiment, when the distance between the swimming pool robot and the swimming pool wall is less than or equal to the first preset threshold, the determining that the distance between the swimming pool robot and the swimming pool wall matches the target distance when moving along the wall edge, includes: when distances between the swimming pool robot and the swimming pool wall measured by two distance detection sensors are less than or equal to the first preset threshold, determining that the distance between the swimming pool robot and the swimming pool wall matches the target distance when moving along the wall edge; and when the distance between the swimming pool robot and the swimming pool wall is greater than the first preset threshold, the determining the distance between the swimming pool robot and the swimming pool wall does not match the target distance when moving along the wall edge, includes: when the distance between the swimming pool robot and the swimming pool wall measured by either one of the distance detection sensors is greater than the first preset threshold, determining the distance between the swimming pool robot and the swimming pool wall does not match the target distance when moving along the wall edge.

Based on the above-mentioned embodiment, whether the distance between the swimming pool robot and the swimming pool wall measured by the distance detection sensor matches the target distance when moving along the wall edge is an important basis for determining whether the swimming pool robot needs to adjust its moving direction and position. If the distance between the swimming pool robot and the edge of the swimming pool is less than or equal to the minimum range of the distance detection sensor, then determining this distance matches the target distance when moving along the wall edge. In other words, when distances measured by two distance detection sensors are less than or equal to the minimum range of the distance detection sensor respectively, the swimming pool robot is in the position of "extreme cleaning along the wall edge", and no additional adjustment of position is required. On the contrary, if the distance measured by either one of the distance detection sensors is greater than the minimum range of the distance detection sensor, determining the distance does not match the target distance when moving along the wall edge. At this time, the swimming pool robot needs to make corresponding adjustments, such as changing the direction, or moving closer to the edge of the swimming pool wall, so that its position can be close to the target distance when moving along the wall edge, so as to better complete the task of cleaning along the wall edge.

In some embodiments, when the distance between the swimming pool robot and the swimming pool wall does not match the target distance when moving along the wall edge, the swimming pool robot is controlled to turn a preset angle towards the swimming pool wall, and the swimming pool robot is driven to move forward. For example, when the task of cleaning along a wall edge is performed, the distance between the swimming pool robot and the edge of the swimming pool wall measured by the distance detection sensor is compared with the target distance when moving along the wall edge. If the two distances do not match, that is, the distance between the swimming pool robot and the swimming pool wall is greater than the preset minimum range, the system can control the swimming pool robot to make relevant adjustments. First, the control system can control the swimming pool robot to turn the preset angle towards the direction of the swimming pool wall. The preset angle is usually determined according to the actual cleaning situation of the swimming pool robot and the specific situation of the swimming pool environment. The purpose of the rotation is to control the swimming pool robot to bring itself direction closer to the edge of the swimming pool wall. The drive system then receives an instruction that causes the swimming pool robot to move forward. This process may be repeated until the distance between the swimming pool robot and the swimming pool wall matches the preset target distance when moving along the wall edge. This ensures that the swimming pool robot can always maintain a suitable distance and clean effectively when the task of cleaning along a wall edge is performed.

In some embodiments, the guide device may be disposed on one side of the swimming pool robot. In the present embodiment, the guide device and the distance detection sensor are located on the same side of the swimming pool robot. The guide device may be a guide wheel or a guide angle structure integrated with the swimming pool robot. Referring to FIG. 2, a guide device 1 and a guide device 2 are located on the same side of the swimming pool robot as the infrared sensor 1 and the infrared sensor 2. In the present embodiment, the guide device 1 and guide device 2 are used to provide the sliding friction to the swimming pool robot, so as to drive the swimming pool robot continue to move forward when the swimming pool robot touches the swimming pool wall or the obstacle. Such a layout optimizes the movement path of the swimming pool robot and helps the swimming pool robot to better clean the swimming pool. The guide device provides important support for the task of cleaning along the wall edge. When the swimming pool robot approaches the edge of the swimming pool wall or encounters the obstacle, the guide device may be contacted with the swimming pool wall or the obstacle. Due to the sliding friction generated by the contact between objects, once the guide device is contacted with the swimming pool wall or the obstacle, this sliding friction will act on the swimming pool robot, driving the swimming pool robot to continue to move forward. In this way, the guide device not only plays a role in adjusting the direction of the swimming pool robot, but also provides a driving force to help the swimming pool robot to move more smoothly, which effectively solves the problem that the traditional swimming pool robot cannot continue to move forward because of obstacle when cleaning along the wall edge, and also enables the swimming pool robot to provide more effective and in-depth cleaning effects when cleaning the edge of the swimming pool wall.

After the guide device touches the swimming pool wall, there may be two consequences: (1) the guide device enables the swimming pool robot to move to a position where the body of the swimming pool robot is parallel with the swimming pool wall, and then the swimming pool robot continues to move forward; and (2) the swimming pool robot adjusts its yaw angle so that the swimming pool robot may move to a position where the body of the swimming pool robot is parallel with the swimming pool wall. How to adjust yaw angle, through which the swimming pool robot could move to a position where its body is paralegal with the swimming pool wall, is a common knowledge in this swimming pool robot field.

In some embodiments, whether the guide device touches the swimming pool wall is determined, and when the guide device touches the swimming pool wall, driving the swimming pool robot to move forward by the sliding friction generated by the guide device and the swimming pool wall, until the distance between the swimming pool robot and the swimming pool wall matches the target distance when moving along the wall edge. For example, when the task of cleaning along a wall edge is performed, it is necessary to constantly verify that whether the guide device touches the swimming pool wall. If the guide device is found to have touched the swimming pool wall, the sliding friction is used to adjust the moving direction and position of the swimming pool robot. The sliding friction is generated by the contact between the guide device and the wall. The swimming pool robot can continue to move forward until the distance between the swimming pool robot and the swimming pool wall rematches the preset target distance when moving along the wall edge. This process may be repeated until the swimming pool robot has fully cleaned along the wall edge. In the present embodiment, the swimming pool robot can more effectively clean along the edge of the swimming pool wall and narrow areas, providing users with a more considerate and efficient solution.

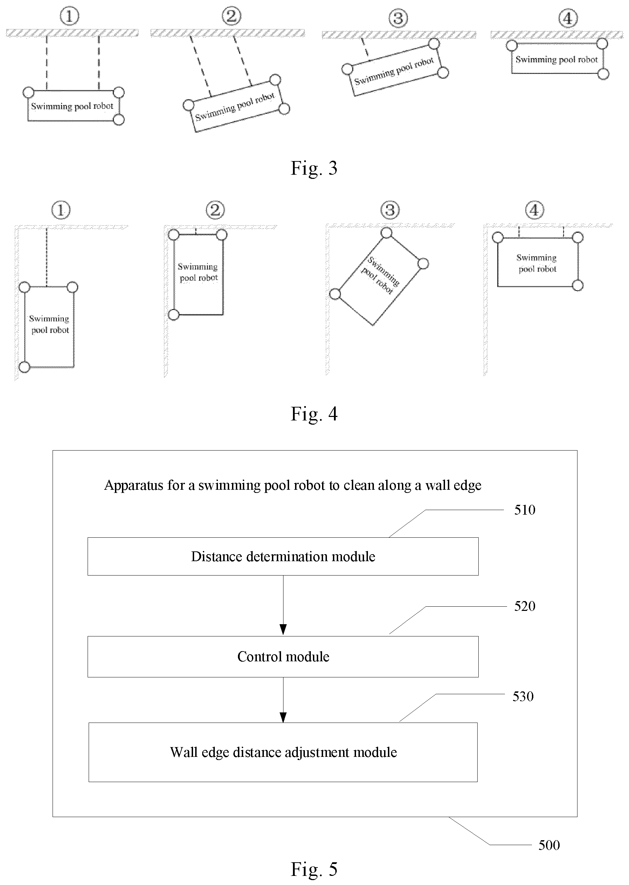

Referring to FIG. 3, when the distance between the swimming pool robot and the swimming pool wall does not match the target distance when moving along the wall edge, that is, the swimming pool robot is in the state (1) in FIG. 3. In this time, the swimming pool robot is controlled to turn the preset angle towards the swimming pool wall, that is, the swimming pool robot is in the state (2) in FIG. 3. The swimming pool robot is then controlled to move forward until the guide device touches the swimming pool wall, that is, the swimming pool robot is in the state (3) in FIG. 3. The sliding friction generated when the guide device touches the swimming pool wall drives the swimming pool robot to move forward until the swimming pool robot is in the state (4) in FIG. 3. The current distance between the swimming pool robot and the swimming pool wall matches the preset target distance when moving along the wall edge. In other words, the current distance between the swimming pool robot and the swimming pool wall reaches the minimum range of the distance detection sensor, and the swimming pool robot can perform the task of cleaning along the wall edge to clean the currently determined area along the wall edge. In addition, due to being closer to the swimming pool wall, friction with the swimming pool wall may inevitably occur. On the one hand, the body of the swimming pool robot may be scratched; on the other hand, the swimming pool robot may be stuck due to excessive friction. Therefore, the corresponding guide device is disposed on the body of the swimming pool robot, so that the swimming pool robot can run more stable and reliable.

In some embodiments, the distance detection sensor can be disposed in front of the swimming pool robot to check whether there is an obstacle in front of the swimming pool robot during the moving. For example, referring to FIG. 2, the distance detection sensor is located in front of the swimming pool robot and detects in real time whether there is an obstacle in front of the swimming pool robot during the cleaning of the determined area along the wall edge. The distance detection sensor sends an infrared beam and receives the reflection of the infrared beam to determine whether there is an obstacle in front of the swimming pool robot. This principle is based on the fact that infrared light will reflect when it encounters the obstacle. Therefore, by detecting the returned infrared light pulse, the swimming pool robot can determine whether there is an obstacle in front of the swimming pool robot, and how far away the obstacle is. When a task of cleaning along a wall edge is performed, the swimming pool robot with the front distance detection sensor can detect the front environment in real time, and when detecting obstacles in front of the swimming pool robot, the swimming pool robot can make an action to avoid or adjust the moving path forward, and continue to complete the cleaning task. This design of disposing front distance detection sensor not only ensures the moving safety of the swimming pool robot, but also improves the overall cleaning efficiency and ensures the smooth completion of the cleaning task.

In some embodiments, the above-mentioned method further includes: when the distance between the swimming pool robot and the swimming pool wall matches the target distance when moving along the wall edge, controlling the swimming pool robot to move forward to clean the current area along the wall edge determined based on the target distance when moving along the wall edge; detecting, by the distance detection sensor located in front of the swimming pool robot, whether there is an obstacle in front of the swimming pool robot to determine a turning time of the swimming pool robot. For example, when the distance between the swimming pool robot and the swimming pool wall matches the preset target distance when moving along the wall edge, the swimming pool robot will proceed to the next task, that is, cleaning the current area along the wall edge. Since the position has been adjusted to the ideal state, the swimming pool robot will follow a predetermined path to move forward inertially and clean the area determined based on the target distance when moving along the wall edge, such as the edge or the narrow areas of the swimming pool. In the process of cleaning, the swimming pool robot still needs to detect the front environment in real time to respond to the obstacle. This is completed by the distance detection sensor located at the front of the swimming pool robot. The distance detection sensor can constantly send a detection signal forward and receive the reflection of the signals to detect whether there is an obstacle in front of the swimming pool robot, and then determine whether a turn is needed. If an obstacle is detected in front, the swimming pool robot will change the direction according to the preset program, avoid the obstacle by turning, and then continue to perform the cleaning task. Such a design ensures that the swimming pool robot can effectively deal with various unpredictable scenarios during the cleaning task, and improves the overall cleaning efficiency and quality of the swimming pool. In the present embodiment, the forward obstacle may be an ornament or other object in the swimming pool, or may be a front of the swimming pool wall.

Based on the above-mentioned embodiment, the detecting, by the distance detection sensor located in front of the swimming pool robot, whether there is an obstacle in front of the swimming pool robot to determine a turning time of the swimming pool robot, includes: sending a detection signal forward in real time by the distance detection sensor in front of the swimming pool robot; when the distance detection sensor receives the detection signal returned by an obstacle, determining there is the obstacle in front of the sensor; when there is the obstacle in front of the sensor, determining the distance between the swimming pool robot and the obstacle according to the detection signal returned; when the distance between the swimming pool robot and the obstacle is less than or equal to the second preset threshold, determining the turning time of the swimming pool robot. Specifically, the distance detection sensor first sends the detection signal forward, and the detection signal is a form of radio waves and is used to search for possible objects in an unknown environment. The distance detection sensor then receives and detects the detection signal returned, and if the detection signal returned is received, determining there is an obstacle in front. Next, the distance detection sensor calculates the distance between the swimming pool robot and the obstacle in front of the robot based on the strength and timing of the detection signal returned. This is calculated based on physical principles, that is, the light reflection law and the light refraction law, as well as the date such as the speed of light in the process of propagation. Finally, if the results show that the distance between the swimming pool robot and the obstacle in front is less than or equal to the second preset threshold, and then the swimming pool robot needs to turn. At this time, the swimming pool robot receives the detection signal returned, adjusts the moving direction in time, avoids the obstacle, and ensures that the cleaning task is performed smoothly. This is an intelligent strategy intended to improve the efficiency and quality of cleaning, while protecting the swimming pool robot from possible damage.

In some embodiments, the above-mentioned method further includes: when the swimming pool robot reaches the turning time, a turning instruction is executed to control the swimming pool robot turn the preset angle, and the preset angle is less than or equal to 90 degrees. When the two guide devices touch the swimming pool wall or the obstacle in the process of rotation of the swimming pool robot, the sliding friction generated by the two guide devices and the swimming pool wall or the obstacle drives the swimming pool robot to complete the turning. For example, when the turning time of the swimming pool robot is reached, the system may execute a turn instruction that enables the swimming pool robot to start turning at the preset angle. In the present embodiment, the preset angle is equal to or less than 90 degrees. This is because a moderate turning angle can ensure that the swimming pool robot can better deal with emergencies in the process of turning, and at the same time ensure the moving stability of the swimming pool robot. In the process of executing the turning instruction, the two guide devices on the side of the swimming pool robot may be contacted with the swimming pool wall or the obstacles in front of the swimming pool robot. At this time, the sliding friction is generated due to the contact between the guide device and the swimming pool wall or the obstacle. The function of sliding friction is to enable the swimming pool robot to show a stable turning motion without skidding or deviating from the preset path due to insufficient friction. Under the action of sliding friction, the swimming pool robot will complete the entire turning process, and when the turning is completed, the swimming pool robot will continue to perform subsequent cleaning tasks. In this way, it effectively ensures that the swimming pool robot can flexibly and accurately avoid the obstacle in the process of performing the cleaning task, thereby ensuring the efficient of performing the cleaning task.

Based on the above-mentioned embodiment, referring to FIG. 4, when the distance between the swimming pool robot and the swimming pool wall matches the target distance when moving along the wall edge, that is, the swimming pool robot is in the state (1) in FIG. 4. In this time, the swimming pool robot is controlled to move forward to clean the current area along the wall edge determined based on the target distance when moving along the wall edge, that is, the swimming pool robot is in the state (2) in FIG. 4. In the process of cleaning the current area along the wall edge, the distance between the swimming pool robot and the obstacle is determined by the distance detection sensor in front of the swimming pool robot. When the determined distance is equal to the minimum range of the distance detection sensor, the turning instruction is executed to control the swimming pool robot to turn the preset turning angle, that is, the swimming pool robot is in the state (3) in FIG. 4. In the process of executing the turning instruction, two guide devices on one side of the swimming pool robot may be contacted with the swimming pool wall or the obstacle. At this time, due to the contact between the guide device and the swimming pool wall or the obstacle, the sliding friction will be generated, and the sliding friction generated by the two guide devices and the obstacle or the swimming pool wall drives the swimming pool robot forward to complete the turn, that is, the swimming pool robot is in the state (4) in FIG. 4. In the present embodiment, the advantage that the minimum range of the distance detection sensor is smaller than the minimum range of the traditional ultrasonic sensor is utilized to enable the swimming pool robot to get closer to the swimming pool wall within a controllable range when turning, thereby improving the clean area of the swimming pool corner. In addition, due to being closer to the swimming pool corner, friction with the swimming pool wall may inevitably occur. On the one hand, the body may be scratched; on the other hand, the machine may be stuck due to excessive friction. Therefore, the corresponding guide device is disposed on the body of the swimming pool robot, so that the swimming pool robot can run more stable and reliable when turning.

In some embodiments, the above-mentioned method further includes: when the swimming pool robot completes the turning, switching the motion mode of the swimming pool robot to continue to perform the task of cleaning along the wall edge; determining whether the distance between the swimming pool robot and the obstacle matches the target distance when moving along the wall edge. If the distance does not match the target distance when moving along the wall edge, the current area of cleaning along the wall edge of the swimming pool robot is determined by two distance detection sensors and guide devices located on the same side of the swimming pool robot. For example, after the swimming pool robot encounters the obstacle and completes the turning operation, the swimming pool robot will switch the motion mode, so that the swimming pool robot can continue to perform the previous task of cleaning along the wall edge. The operation of switching motion mode enables the swimming pool robot to adjust its state according to different scenarios. For example, the state of encountering the obstacle and completing the turning is switched to the state of clearing along the wall side. This intelligent switching mechanism enables the swimming pool robot to immediately start the next task after completing one task, greatly improving the cleaning efficiency. In addition, the swimming pool robot also needs to determine whether the distance between the swimming pool robot and the obstacle is consistent with the target distance when moving along the wall edge, by the above-mentioned method. If not, based on the above-mentioned method, two distance detection sensors and guide devices located on the same side of the swimming pool robot are utilized to determine the current area of cleaning along the wall edge of the swimming pool robot, so as to perform the cleaning work on the current area of cleaning along the wall edge determined.

The following is the apparatus example of the present disclosure, which may be used to perform the method example of the present disclosure. The apparatus for the swimming pool robot to clean along the wall edge described below and the method for the swimming pool robot to clean along the wall edge described above can be referred to each other. For details not disclosed in the apparatus example of the present disclosure, please refer to the method example of the present disclosure.

FIG. 5 is a structural schematic diagram of an apparatus for a swimming pool robot to clean along a wall edge provided by an embodiment of the present disclosure. The swimming pool robot includes a distance detection sensor and a guide device, and at least one distance detection sensor and the guide device are located on the same side of the swimming pool robot. As shown in FIG. 5, the apparatus for the swimming pool robot to clean along the wall edge 500 includes a distance determination module 510, a control module 520 and a wall edge distance adjustment module 530.

Specifically, the distance determination module 510 is configured to determine, by the distance detection sensor, a distance between the swimming pool robot and a swimming pool wall, when a task of cleaning along the wall edge is performed.

The control module 520 is configured to determine whether the distance between the swimming pool robot and the swimming pool wall matches a target distance when moving along the wall edge, and when the distance between the swimming pool robot and the swimming pool wall does not match the target distance when moving along the wall edge, controlling the swimming pool robot to turn towards the swimming pool wall, and driving the swimming pool robot to move forward.

The wall edge distance adjustment module 530 is configured to determine whether the guide device touches the swimming pool wall, and when the guide device touches the swimming pool wall, driving the swimming pool robot to move forward by the sliding friction generated by the guide device and the swimming pool wall, until the distance between the swimming pool robot and the swimming pool wall matches the target distance when moving along the wall edge.

The apparatus for the swimming pool robot to clean along the wall edge 500 can adopts a manner that the distance detection sensor and the guide device coordinate with the swimming pool wall to realize the precise cleaning of the swimming pool robot along the wall edge. This design allows the swimming pool robot to more accurately identify and approach the swimming pool wall, thereby achieving an efficient cleaning of the swimming pool wall. First, equipped with the distance detection sensors, the swimming pool robot can effectively sense and determine its distance from the swimming pool wall. When a determined distance deviates from a preset distance of cleaning along a wall edge, the swimming pool robot can adjust itself direction and drive forward by a control system to clean close to the swimming pool wall. Secondly, when the guide device touches the swimming pool wall, the swimming pool robot can drive itself to move forward by using the friction generated between the guide device and the swimming pool wall, further ensuring the stability and continuity of its cleaning along the wall edge. In this way, the cleaning work along the wall of the swimming pool robot can not only improve the cleaning efficiency, but also improve the effectiveness of the cleaning results, thereby effectively solving the problems of the existing swimming pool robot in cleaning the areas of narrow outline, such as the areas along the swimming pool wall.

In some embodiments, the distance determination module 510 is configured to: when the task of cleaning along the wall edge is performed by the swimming pool robot, record in real time a time information of sending infrared pulse signals to the swimming pool wall by the distance detection sensor and record in real time a time information of receiving the infrared pulse signals return from the swimming pool wall by the distance detection sensor; determining the distance between the swimming pool robot and the swimming pool wall according to the time information of sending infrared pulse signals to the swimming pool wall by the distance detection sensor and the time information of receiving the infrared pulse signals return from the swimming pool wall by the distance detection sensor.

In some embodiments, the control module 520 is configured to: when the distance between the swimming pool robot and the swimming pool wall is less than or equal to the first preset threshold, the determining the distance between the swimming pool robot and the swimming pool wall matches the target distance when moving along the wall edge; when the distance between the swimming pool robot and the swimming pool wall is greater than the first preset threshold, determining the distance between the swimming pool robot and the swimming pool wall does not match the target distance when moving along the wall edge.

In some embodiments, the apparatus for the swimming pool robot to clean along the wall edge 500 is further configured to: when the distance between the swimming pool robot and the swimming pool wall matches the target edge distance, controlling the swimming pool robot to move forward to clean the current area along the wall edge determined based on the target distance when moving along the wall edge; in the process of cleaning the current area along the wall edge, detecting, by the distance detection sensor located in front of the swimming pool robot, whether there is the obstacle in front of the swimming pool robot to determine the turning time of the swimming pool robot.

In some embodiments, the detecting, by the distance detection sensor located in front of the swimming pool robot, whether there is the obstacle in front of the swimming pool robot to determine the turning time of the swimming pool robot, including: sending the detection signal forward in real time by the distance detection sensor located in front of the swimming pool robot; when the distance detection sensor receives the detection signal returned by an obstacle, determining there is the obstacle in front of the sensor; when there is the obstacle in front of the sensor, determining the distance between the swimming pool robot and the obstacle according to the detection signal returned; when the distance between the swimming pool robot and the obstacle is less than or equal to the second preset threshold, determining the turning time of the swimming pool robot.

In some embodiments, the apparatus for the swimming pool robot to clean along the wall edge 500 is further configured to: when the swimming pool robot reaches the turning time, execute the turning instruction to control the swimming pool robot to turn the preset angle, the preset angle is less than or equal to 90 degrees; when two guide devices touch the swimming pool wall or the obstacle in the turning process of the swimming pool robot, driving, by the sliding friction generated by the two guide devices and the swimming pool wall or the obstacle, the swimming pool robot to complete the turning.

In some embodiments, the apparatus for the swimming pool robot to clean along the wall edge 500 is further configured to: when the swimming pool robot completes the turning, switch the motion mode of the swimming pool robot to continue to perform the task of cleaning the wall edge; determine whether the distance between the swimming pool robot and the obstacle matches the target distance when moving along the wall edge. If not, the current area of cleaning along the wall edge of the swimming pool robot is determined by two distance detection sensors and guidance devices located on the same side of the swimming pool robot.

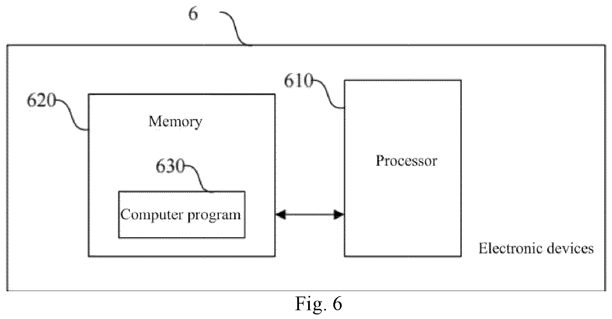

FIG. 6 is a structural schematic diagram of a swimming pool robot provided by an embodiment of the present disclosure. As shown in FIG. 6, the swimming pool robot 6 of the present embodiment includes a processor 601, a memory 602, and a computer program 603 that is stored in the memory 602 and is run on the processor 601. The processor 601 executes the computer program 603 to implement the steps in the method of various embodiments. Or, the processor 601, when executes the computer program 603, implements the functions of each module in the apparatus of various embodiments.

The swimming pool robot 6 may include, but is not limited to, processor 601 and memory 602. Persons skilled in the art may understand that FIG. 6 is only an example of the swimming pool robot 6 and does not constitute a limitation for the swimming pool robot 6, which may include more or fewer parts than shown in figure, or different parts.

The processor 601 can be Central Processing Unit (CPU), or other general-purpose processor, Digital Signal Processor (DSP), Application Specific Integrated Circuit (ASIC), Field-Programmable Gate Array (FPGA) or other programmable logic devices, discrete gate or transistor logic devices, discrete hardware components, and so on.

The memory 602 can be an internal storage unit of the swimming pool robot 6, for example, the hard disk or memory of the swimming pool robot 6. The memory 602 can also be an external storage device of the swimming pool robot 6, for example, a plug-in hard drive, Smart Medium Card (SMC), Secure Digital (SD) Card, Flash Card, etc., equipped with the swimming pool robot 6. The memory 602 can also include both internal storage unit and external storage device of the swimming pool robot 6. The memory 602 is configured to store computer programs and other programs and data required by the swimming pool robot.

Persons skilled in the art can clearly understand that in order to conveniently and succinctly describe, only the division of the functional units and modules are illustrated by example, in practical application, the function can be assigned by different functional units and modules according to needs, that is, the internal structure of the device is divided into different functional units or modules to complete all or some of the functions as described above. Each functional unit and module in the embodiment can be integrated in a processing unit, or can be each unit that physically existing separately, or can be an integration of two or more units in a single unit. The integrated unit can be realized in the form of hardware, or in the form of software functional units.

Integrated modules can be stored in a computer readable storage medium if implemented in the form of software functional units and marketed or used as stand-alone products. Based on this understanding, the present disclosure may realize all or part of the process in the above-mentioned method of embodiments, or may also be accomplished by instructs the relevant hardware through a computer program, the computer program may be stored in a computer readable storage medium, and the computer program, when executed by a processor, may implement the steps of the above-mentioned method of embodiments. The computer program may include a computer program code, the computer program code may be in a source code form, an object code form, an executable file or some intermediate form. The computer readable medium may include: any entity or device capable of carrying computer program code, a recording medium, a USB flash drive, a portable hard drive, a magnetic disk, an optical disc, a computer storage, a Read-Only Memory (ROM), a Random Access Memory (RAM), an electric carrier signal, a telecommunication signal and a software distribution medium, etc. It should be noted that the contents included in the computer readable medium may be increased or decreased as appropriate in accordance with the requirements of the legislation and patent practice of the jurisdiction. For example, in some jurisdictions, according to the legislation and patent practice, the computer readable medium does not include an electric carrier signal and a telecommunications signal.

The above-mentioned embodiments are only used to illustrate the technical solution of the present disclosure and not to restrict. Notwithstanding, the present disclosure is described in detail by reference to the foregoing embodiments, persons skilled in the art should understand that the technical solution recorded in the foregoing embodiments may be modified, or some of the technical features therein may be equivalent replaced. Such modification or replacement shall be included in the protection scope of the present disclosure without departing the essence of the corresponding technical solution from the spirit and scope the technical solution of various embodiments of the present disclosure.

In addition, it should be understood that, although this specification is described in terms of implementations, each of implementation does not contain only an independent technical solution. The specification described in this manner is only for the sake of clarity, and the specification should be taken as a whole by persons skilled in the art and the technical solution in the various embodiments may be combined as appropriate to form other implementations of implementation that are understandable to persons skilled in the art.

The following section of the description relates to further examples. The numbered paragraphs in this section are not claims. The claims are set forth below in the later section headed "claims".
1. A method for a swimming pool robot to clean along a wall edge, the swimming pool robot comprises a distance detection sensor and a guide device, wherein the method comprises:
   in a case where a task of cleaning along the wall edge is performed, determining, by the distance detection sensor, a distance between the swimming pool robot and a swimming pool wall;
   determining whether the distance between the swimming pool robot and the swimming pool wall matches a target distance when moving along the wall edge, and in a case where the distance between the swimming pool robot and the swimming pool wall does not match the target distance when moving along the wall edge, controlling the swimming pool robot to turn towards the swimming pool wall, and driving the swimming pool robot to move forward;
   determining whether the guide device touches the swimming pool wall, and in a case where the guide device touches the swimming pool wall, driving the swimming pool robot to move forward, until the distance between the swimming pool robot and the swimming pool wall matches the target distance when moving along the wall edge.
2. The method according to clause 1, wherein the target distance when moving along the wall edge is less than or equal to 5 cm.
3. The method according to clause 1 or clause 2, wherein the guide device is a guide wheel or a guide angle structure integrated with the swimming pool robot.
4. The method according to any one preceding clause, wherein the determining whether the distance between the swimming pool robot and the swimming pool wall matches a target distance when moving along the wall edge comprises:
   in a case where the distance between the swimming pool robot and the swimming pool wall is less than or equal to a first preset threshold, determining the distance between the swimming pool robot and the swimming pool wall matches the target distance when moving along the wall edge;
   in a case where the distance between the swimming pool robot and the swimming pool wall is greater than the first preset threshold, determining the distance between the swimming pool robot and the swimming pool wall does not match the target distance when moving along the wall edge.
5. The method according to clause 4, wherein the distance detection sensor is disposed on a side of the swimming pool robot, and a number of the distance detection sensor is two;
   in a case where the distance between the swimming pool robot and the swimming pool wall is less than or equal to the first preset threshold, the determining the distance between the swimming pool robot and the swimming pool wall matches the target distance when moving along the wall edge comprises: in a case where the distances between the swimming pool robot and the swimming pool wall measured by the two distance detection sensors are both less than or equal to the first preset threshold, determining the distance between the swimming pool robot and the swimming pool wall matches the target distance when moving along the wall edge;
   in a case where the distance between the swimming pool robot and the swimming pool wall is greater than the first preset threshold, the determining the distance between the swimming pool robot and the swimming pool wall does not match the target distance when moving along the wall edge comprises: in a case where the distance between the swimming pool robot and the swimming pool wall measured by either one of the distance detection sensors is greater than the first preset threshold, determining the distance between the swimming pool robot and the swimming pool wall does not match the target distance when moving along the wall edge.
6. The method according to any one preceding clause, wherein the method further comprises:
   in a case where the distance between the swimming pool robot and the swimming pool wall matches the target distance when moving along the wall edge, controlling the swimming pool robot to move forward to clean a current area along the wall edge determined based on the target distance when moving along the wall edge;
   in a process of cleaning the current area along the wall edge, detecting, by the distance detection sensor located in front of the swimming pool robot, whether there is an obstacle in front of the swimming pool robot to determine a turning time of the swimming pool robot.
7. The method according to clause 6, wherein the detecting, by the distance detection sensor located in front of the swimming pool robot, whether there is an obstacle in front of the swimming pool robot to determine a turning time of the swimming pool robot comprises:
   sending, by the distance detection sensor located in front of the swimming pool robot, a detection signal forward in real time;
   in a case where the distance detection sensor receives the detection signal returned by an obstacle, determining there is the obstacle in front of the distance detection sensor;
   in a case where there is the obstacle in front of the distance detection sensor, determining the distance between the swimming pool robot and the obstacle according to the detection signal returned;
   in a case where the distance between the swimming pool robot and the obstacle is less than or equal to a second preset threshold, determining the turning time of the swimming pool robot.
8. The method according to clause 6 or clause 7, wherein the method further comprises:
   in a case where the swimming pool robot reaches the turning time, executing a turning instruction to control the swimming pool robot to turn a preset angle, the preset angle is less than or equal to 90 degrees;
   in a case where the guide device touches the swimming pool wall or the obstacle in turning process of the swimming pool robot, driving the swimming pool robot to complete the turning.
9. An apparatus for a swimming pool robot to clean along a wall edge, the swimming pool robot comprises a distance detection sensor and a guide device, wherein the apparatus comprises:
   a distance determination module configured to determine, by the distance detection sensor, a distance between the swimming pool robot and a swimming pool wall, in a case where a task of cleaning along the wall edge is performed;
   a control module configured to determine whether the distance between the swimming pool robot and the swimming pool wall matches a target distance when moving along the wall edge,
   and in a case where the distance between the swimming pool robot and the swimming pool wall does not match the target distance when moving along the wall edge, controlling the swimming pool robot to turn towards the swimming pool wall, and driving the swimming pool robot to move forward;
   a wall edge distance adjustment module configured to determine whether the guide device touches the swimming pool wall, and in a case where the guide device touches the swimming pool wall, driving the swimming pool robot to move forward, until the distance between the swimming pool robot and the swimming pool wall matches the target distance when moving along the wall edge.
10. A swimming pool robot, comprising a distance detection sensor, a guide device, and a processor, wherein the processor is configured to:
   determine, through the distance detection sensor, a distance between a swimming pool robot and a swimming pool wall in a case where a task of cleaning along the wall edge is performed; and
   determine whether the distance between the swimming pool robot and the swimming pool wall matches a target distance when moving along the wall edge, and in a case where the distance between the swimming pool robot and the swimming pool wall does not match the target distance when moving along the wall edge, the processor is further configured to:
      control the swimming pool robot to turn towards the swimming pool wall, and drive the swimming pool robot to move forward; and
      determine whether the guide device touches the swimming pool wall, and in a case where the guide device touches the swimming pool wall, the processor is further configured to drive the swimming pool robot to move forward, until the distance between the swimming pool robot and the swimming pool wall matches the target distance when moving along the wall edge.
11. The swimming pool robot according to clause 10, wherein the target distance when moving along the wall edge is less than or equal to 5 cm.
12. The swimming pool robot according to clause 10 or clause 11, wherein the guide device is a guide wheel or a guide angle structure integrated with the swimming pool robot.
13. The swimming pool robot according to any one of clauses 10 to 12, wherein the processor is further configured to:
   in a case where the distance between the swimming pool robot and the swimming pool wall is less than or equal to a first preset threshold, determine the distance between the swimming pool robot and the swimming pool wall matches the target distance when moving along the wall edge;
   in a case where the distance between the swimming pool robot and the swimming pool wall is greater than the first preset threshold, determine the distance between the swimming pool robot and the swimming pool wall does not match the target distance when moving along the wall edge.
14. A method for a swimming pool robot to clean along a wall edge, the swimming pool robot comprises a distance detection sensor and a guide device, the guide device being deposed at a side of the swimming pool robot, wherein the method comprises:
   in a case where a task of cleaning along the wall edge is performed, determining, through the distance detection sensor, a distance between the swimming pool robot and a swimming pool wall;
   determining whether the distance between the swimming pool robot and the swimming pool wall matches a target distance when moving along the wall edge, and in a case where the distance between the swimming pool robot and the swimming pool wall does not match the target distance when moving along the wall edge, controlling the swimming pool robot to turn towards the swimming pool wall;
   controlling the swimming pool robot to continue to move forward after the turning, and during the swimming pool robot's continued forward movement, the guide device is able to contact the swimming pool wall.
15. The method according to clause 14, wherein in a case where the guide device contacts the swimming pool wall, the method further comprises:
   controlling the swimming pool robot to continue to move forward, and during the swimming pool robot's continued forward movement, the distance between the swimming pool robot and the swimming pool wall matches the target distance when moving along the wall edge.
16. The method according to clause 15, wherein in a case where the guide device contacts the swimming pool wall, the controlling the swimming pool robot to continue to move forward comprises:
   determining whether the guide device contacts the swimming pool wall, and in a case where the guide device contacts the swimming pool wall, the method further comprises:
   adjusting a yaw angle of the swimming pool robot to make the swimming pool robot's forward direction to be parallel to the swimming pool wall.
17. The method according to clause 15, wherein in a case where the guide device contacts the swimming pool wall, the controlling the swimming pool robot to continue to move forward comprises:
   determining whether the guide device contacts the swimming pool wall, and in a case where the guide device contacts the swimming pool wall, the method further comprises:
   decreasing a moving speed of the swimming pool robot;
   after the moving speed is decreased, a reaction force caused by the contact enables the swimming pool robot's forward direction to be parallel to the swimming pool wall.
18. The method according to any one of clauses 14 to 17, wherein the guide device is a guide wheel.
19. A swimming pool robot, comprising a distance detection sensor, a guide device, and a processor, wherein the processor is configured to:
   determine, through the distance detection sensor, a distance between the swimming pool robot and a swimming pool wall in a case where a task of cleaning along the wall edge is performed;
   determine whether the distance between the swimming pool robot and the swimming pool wall matches a target distance when moving along the wall edge, and in a case where the distance between the swimming pool robot and the swimming pool wall does not match the target distance when moving along the wall edge, the processor is further configured to:
      control the swimming pool robot to turn towards the swimming pool wall; and
      control the swimming pool robot to continue to move forward after the turning, and during the swimming pool robot's continued forward movement, the guide device is able to contact the swimming pool wall.
20. A computer-readable storage medium having computer programs stored thereon, wherein the computer programs, when executed by a processor, implement the steps of the method according to any one of clauses 1 to 8 or any one of clauses 14 to 18.

## Claims

1. A method for a swimming pool robot to clean along a wall edge, the swimming pool robot comprises a distance detection sensor and a guide device, wherein the method comprises:
in a case where a task of cleaning along the wall edge is performed, determining, by the distance detection sensor, a distance between the swimming pool robot and a swimming pool wall;
determining whether the distance between the swimming pool robot and the swimming pool wall matches a target distance when moving along the wall edge, and in a case where the distance between the swimming pool robot and the swimming pool wall does not match the target distance when moving along the wall edge, controlling the swimming pool robot to turn towards the swimming pool wall, and driving the swimming pool robot to move forward;
determining whether the guide device touches the swimming pool wall, and in a case where the guide device touches the swimming pool wall, driving the swimming pool robot to move forward, until the distance between the swimming pool robot and the swimming pool wall matches the target distance when moving along the wall edge.

2. The method according to claim 1, wherein the target distance when moving along the wall edge is less than or equal to 5 cm.

3. The method according to claim 1 or claim 2, wherein the guide device is a guide wheel or a guide angle structure integrated with the swimming pool robot.

4. The method according to any one preceding claim, wherein the determining whether the distance between the swimming pool robot and the swimming pool wall matches a target distance when moving along the wall edge comprises:
in a case where the distance between the swimming pool robot and the swimming pool wall is less than or equal to a first preset threshold, determining the distance between the swimming pool robot and the swimming pool wall matches the target distance when moving along the wall edge;
in a case where the distance between the swimming pool robot and the swimming pool wall is greater than the first preset threshold, determining the distance between the swimming pool robot and the swimming pool wall does not match the target distance when moving along the wall edge.

5. The method according to claim 4, wherein the distance detection sensor is disposed on a side of the swimming pool robot, and a number of the distance detection sensor is two;
in a case where the distance between the swimming pool robot and the swimming pool wall is less than or equal to the first preset threshold, the determining the distance between the swimming pool robot and the swimming pool wall matches the target distance when moving along the wall edge comprises: in a case where the distances between the swimming pool robot and the swimming pool wall measured by the two distance detection sensors are both less than or equal to the first preset threshold, determining the distance between the swimming pool robot and the swimming pool wall matches the target distance when moving along the wall edge;
in a case where the distance between the swimming pool robot and the swimming pool wall is greater than the first preset threshold, the determining the distance between the swimming pool robot and the swimming pool wall does not match the target distance when moving along the wall edge comprises: in a case where the distance between the swimming pool robot and the swimming pool wall measured by either one of the distance detection sensors is greater than the first preset threshold, determining the distance between the swimming pool robot and the swimming pool wall does not match the target distance when moving along the wall edge.

6. The method according to any one preceding claim, wherein the method further comprises:
in a case where the distance between the swimming pool robot and the swimming pool wall matches the target distance when moving along the wall edge, controlling the swimming pool robot to move forward to clean a current area along the wall edge determined based on the target distance when moving along the wall edge;
in a process of cleaning the current area along the wall edge, detecting, by the distance detection sensor located in front of the swimming pool robot, whether there is an obstacle in front of the swimming pool robot to determine a turning time of the swimming pool robot.

7. The method according to claim 6, wherein the detecting, by the distance detection sensor located in front of the swimming pool robot, whether there is an obstacle in front of the swimming pool robot to determine a turning time of the swimming pool robot comprises:
sending, by the distance detection sensor located in front of the swimming pool robot, a detection signal forward in real time;
in a case where the distance detection sensor receives the detection signal returned by an obstacle, determining there is the obstacle in front of the distance detection sensor;
in a case where there is the obstacle in front of the distance detection sensor, determining the distance between the swimming pool robot and the obstacle according to the detection signal returned;
in a case where the distance between the swimming pool robot and the obstacle is less than or equal to a second preset threshold, determining the turning time of the swimming pool robot.

8. The method according to claim 6 or claim 7, wherein the method further comprises:
in a case where the swimming pool robot reaches the turning time, executing a turning instruction to control the swimming pool robot to turn a preset angle, the preset angle is less than or equal to 90 degrees;
in a case where the guide device touches the swimming pool wall or the obstacle in turning process of the swimming pool robot, driving the swimming pool robot to complete the turning.

9. An apparatus for a swimming pool robot to clean along a wall edge, the swimming pool robot comprises a distance detection sensor and a guide device, wherein the apparatus comprises:
a distance determination module configured to determine, by the distance detection sensor, a distance between the swimming pool robot and a swimming pool wall, in a case where a task of cleaning along the wall edge is performed;
a control module configured to determine whether the distance between the swimming pool robot and the swimming pool wall matches a target distance when moving along the wall edge,
and in a case where the distance between the swimming pool robot and the swimming pool wall does not match the target distance when moving along the wall edge, controlling the swimming pool robot to turn towards the swimming pool wall, and driving the swimming pool robot to move forward;
a wall edge distance adjustment module configured to determine whether the guide device touches the swimming pool wall, and in a case where the guide device touches the swimming pool wall, driving the swimming pool robot to move forward, until the distance between the swimming pool robot and the swimming pool wall matches the target distance when moving along the wall edge.

10. A swimming pool robot, comprising a distance detection sensor, a guide device, and a processor, wherein the processor is configured to:
determine, through the distance detection sensor, a distance between a swimming pool robot and a swimming pool wall in a case where a task of cleaning along the wall edge is performed; and
determine whether the distance between the swimming pool robot and the swimming pool wall matches a target distance when moving along the wall edge, and in a case where the distance between the swimming pool robot and the swimming pool wall does not match the target distance when moving along the wall edge, the processor is further configured to:
control the swimming pool robot to turn towards the swimming pool wall, and drive the swimming pool robot to move forward; and
determine whether the guide device touches the swimming pool wall, and in a case where the guide device touches the swimming pool wall, the processor is further configured to drive the swimming pool robot to move forward, until the distance between the swimming pool robot and the swimming pool wall matches the target distance when moving along the wall edge.

11. The swimming pool robot according to claim 10, wherein the target distance when moving along the wall edge is less than or equal to 5 cm.

12. The swimming pool robot according to claim 10 or claim 11, wherein the guide device is a guide wheel or a guide angle structure integrated with the swimming pool robot.

13. The swimming pool robot according to any one of claims 10 to 12, wherein the processor is further configured to:
in a case where the distance between the swimming pool robot and the swimming pool wall is less than or equal to a first preset threshold, determine the distance between the swimming pool robot and the swimming pool wall matches the target distance when moving along the wall edge;
in a case where the distance between the swimming pool robot and the swimming pool wall is greater than the first preset threshold, determine the distance between the swimming pool robot and the swimming pool wall does not match the target distance when moving along the wall edge.

14. A method for a swimming pool robot to clean along a wall edge, the swimming pool robot comprises a distance detection sensor and a guide device, the guide device being deposed at a side of the swimming pool robot, wherein the method comprises:
in a case where a task of cleaning along the wall edge is performed, determining, through the distance detection sensor, a distance between the swimming pool robot and a swimming pool wall;
determining whether the distance between the swimming pool robot and the swimming pool wall matches a target distance when moving along the wall edge, and in a case where the distance between the swimming pool robot and the swimming pool wall does not match the target distance when moving along the wall edge, controlling the swimming pool robot to turn towards the swimming pool wall;
controlling the swimming pool robot to continue to move forward after the turning, and during the swimming pool robot's continued forward movement, the guide device is able to contact the swimming pool wall.

15. The method according to claim 14, wherein in a case where the guide device contacts the swimming pool wall, the method further comprises:
controlling the swimming pool robot to continue to move forward, and during the swimming pool robot's continued forward movement, the distance between the swimming pool robot and the swimming pool wall matches the target distance when moving along the wall edge.

16. The method according to claim 15, wherein in a case where the guide device contacts the swimming pool wall, the controlling the swimming pool robot to continue to move forward comprises:
determining whether the guide device contacts the swimming pool wall, and in a case where the guide device contacts the swimming pool wall, the method further comprises:
adjusting a yaw angle of the swimming pool robot to make the swimming pool robot's forward direction to be parallel to the swimming pool wall.

17. The method according to claim 15, wherein in a case where the guide device contacts the swimming pool wall, the controlling the swimming pool robot to continue to move forward comprises:
determining whether the guide device contacts the swimming pool wall, and in a case where the guide device contacts the swimming pool wall, the method further comprises:
decreasing a moving speed of the swimming pool robot;
after the moving speed is decreased, a reaction force caused by the contact enables the swimming pool robot's forward direction to be parallel to the swimming pool wall.

18. The method according to any one of claims 14 to 17, wherein the guide device is a guide wheel.

19. A swimming pool robot, comprising a distance detection sensor, a guide device, and a processor, wherein the processor is configured to:
determine, through the distance detection sensor, a distance between the swimming pool robot and a swimming pool wall in a case where a task of cleaning along the wall edge is performed;
determine whether the distance between the swimming pool robot and the swimming pool wall matches a target distance when moving along the wall edge, and in a case where the distance between the swimming pool robot and the swimming pool wall does not match the target distance when moving along the wall edge, the processor is further configured to:
control the swimming pool robot to turn towards the swimming pool wall; and
control the swimming pool robot to continue to move forward after the turning, and during the swimming pool robot's continued forward movement, the guide device is able to contact the swimming pool wall.

20. A computer-readable storage medium having computer programs stored thereon, wherein the computer programs, when executed by a processor, implement the steps of the method according to any one of claims 1 to 8 or any one of claims 14 to 18.
